(19) Europäisches Patentamt
European Patent Office
Office européen des brevets

(11) **EP 2 983 132 A1**

(12) **EUROPEAN PATENT APPLICATION**

(43) Date of publication:
**10.02.2016 Bulletin 2016/06**

(51) Int Cl.:
***G06T 7/00*** *(2006.01)* ***H04N 5/272*** *(2006.01)*

(21) Application number: **14306258.6**

(22) Date of filing: **08.08.2014**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**

(71) Applicant: **Thomson Licensing
92130 Issy-les-Moulineaux (FR)**

(72) Inventors:
• **Schlosser, Markus
30177 Hannover (DE)**

• **Hoerentrup, Jobst
30974 Wennigsen (DE)**
• **Sorgi, Lorenzo
30163 Hannover (DE)**

(74) Representative: **Schmidt-Uhlig, Thomas
Deutsche Thomson OHG
European Patent Operations
Karl-Wiechert-Allee 74
30625 Hannover (DE)**

(54) **Method and apparatus for determining a sequence of transitions**

(57)    An apparatus (2) and a method of determining a sequence of transitions for a varying state of a system, wherein the system is described by a finite number n of states ($S_i$), and wherein a transition from a current state ($\dot{S}_i$) to a next state ($S_i$) causes a cost in dependence of a distance that is dependent on a previous state ($\ddot{S}_i$), the current state ($\dot{S}_i$), and the next state ($S_i$). The method comprises: combining (10) each two consecutive states to generate super states, wherein the cost for a transition from a current super state to a next super state only depends on the current super state and the next super state; in an iterative process, applying (11) a dynamic programming algorithm to the super states in order to determine a minimum accumulated cost for each varying super state and to determine a preceding super state that led to the minimum accumulated cost; and after a final iteration, determining (12) a final super state with the minimum accumulated cost and retrieving (13) the sequence of the preceding super states leading to the final super state with the minimum accumulated cost.

Fig. 9

EP 2 983 132 A1

**Description**

**FIELD OF THE INVENTION**

The invention relates to an apparatus and to a method for determining a sequence of transitions.

**BACKGROUND OF THE INVENTION**

A variety of varying systems can be described by a finite number of states, wherein a transition from a current state to a next state causes a cost in dependence of a distance that is dependent on a previous state, the current state, and the next state. One example for a varying system being described by a finite number of states is a series of alpha matting profiles being arranged along a margin line in image data, wherein the alpha matting profiles represent the states of the system. In a stream or in a series of images, for example in frames of video data, the series of alpha matting profiles typically varies along the margin line as well as over time. In other words, the system described by the finite number of states varies spatially, i.e. from one segment of the margin line to a consecutive segment, and over time, i.e. from one image or frame to a consecutive image or frame, and is therefore considered a varying system. This variation of the system is due to the fact that a margin line between a foreground object and a background, for example, typically varies over time. This variation of the margin line is frequently due to object movements.

Alpha matting refers to the problem of softly extracting the foreground object from the background. A dynamic cutout of a foreground object is particularly relevant for special effect techniques such as blue screen, green screen or Chroma keying.

These post production techniques cut out a foreground object, for example a person, from a uniform background, which is the blue or green screen.

The straight forward solution for extracting the object is binary segmentation, where each pixel is either classified as a foreground or a background pixel. In contrast to this, alpha matting recognizes the existence of "mixed" pixels.

A major reason for the occurrence of mixed pixels is the limited resolution of digital cameras. Both, light from the foreground object and from the background contribute to the incoming light of a single CCD-element of the digital image sensor. Other reasons can be motion-blur and (semi-)transparencies in the object itself.

The mixing coefficient of a mixed pixel is typically referred to as "alpha", the value of which is defined to be between 0 and 1 (or 0% and 100%). The value of alpha describes the fraction of how much light from the foreground object contributes to the overall incoming light on the image sensor element, which corresponds to a pixel in the captured image.

Alpha coefficients are estimated using alpha matting algorithms. These algorithms estimate the unmixed foreground and background colors and the alpha value. Each unmixed color is defined by three parameters, for example an R-, a G- and a B-value for an RGB color space. Hence, alpha matting means determining seven unknowns from three known parameters. The problem is thus ill-posed and requires additional constraints.

A variety of alpha matting algorithms has been developed in the recent years. Typically, their computational complexity is rather high. This is one major reason why alpha matting is rarely applied in professional post-production of high-resolution image data. On the other hand, the achievable results are frequently much more visually appealing when compared to the results of binary segmentation.

**SUMMARY OF THE INVENTION**

It is an object of the invention to provide an enhanced apparatus and an enhanced method for determining a sequence of transitions for a varying state of a system.

This object is solved by a method of determining a sequence of transitions for a varying state of a system, wherein the system is described by a finite number of states, and wherein a transition from a current state to a next state causes a cost in dependence of a distance that is dependent on a previous state, the current state, and the next state, the method comprising:

- combining each two consecutive states to generate super states, wherein the cost for a transition from a current super state to a next super state only depends on the current super state and the next super state;
- in an iterative process, applying a dynamic programming algorithm to the super states in order to determine a minimum accumulated cost for each varying super state and to determine a preceding super state that led to the minimum accumulated cost; and
- after a final iteration, determining a final super state with the minimum accumulated cost and retrieving the sequence of the preceding super states leading to the final super state with the minimum accumulated cost.

Furthermore, the object is solved by an apparatus for determining a sequence of transitions for a varying state of a system, wherein the system is described by a finite number of states, and wherein a transition from a current state to a next state causes a cost in dependence of a distance that is dependent on a previous state, the current state, and the next state, the apparatus comprising:

- a combining unit configured to combine each two consecutive states to generate super states, wherein the cost for a transition from a current super state to a next super state only depends on the current super state and the next super state;
- a processing unit, which is configured, in an iterative process, to apply a dynamic programming algorithm to the super states in order to determine a minimum accumulated cost for each varying super state and to determine a preceding super state that led to the minimum accumulated cost; and
- wherein the processing unit is further configured, after a final iteration, to determine a final super state with the minimum accumulated cost and to retrieve the sequence of the preceding super states leading to the final super state with the minimum accumulated cost.

Also, the object is solved by a computer readable storage medium having stored therein instructions enabling determining a sequence of transitions for a varying state of a system, wherein the system is described by a finite number of states, and wherein a transition from a current state to a next state causes a cost in dependence of a distance that is dependent on a previous state, the current state, and the next state, wherein the instructions, when executed by a computer, cause the computer to:

- combine each two consecutive states to generate super states, wherein the cost for a transition from a current super state to a next super state only depends on the current super state and the next super state;
- in an iterative process, apply a dynamic programming algorithm to the super states in order to determine a minimum accumulated cost for each varying super state and to determine a preceding super state that led to the minimum accumulated cost; and
- after a final iteration, determine a final super state with the minimum accumulated cost and retrieve the sequence of the preceding super states leading to the final super state with the minimum accumulated cost.

Advantageously, a dynamic programming algorithm is used in the system, which is described by a finite number of states, wherein the cost function for a transition between states depends on three states, namely the previous state, the current state and the next state. For example, the dynamic programming algorithm is implemented as a distance transform. The applicability of the dynamic programming algorithm is mainly due to the generation of super states. By this, the problem is restricted to the calculation of the cost for a transformation from the current super state to the next super state. The cost is preferably defined such that it depends on the squared distance or the absolute distance.

In one embodiment, the super states are grouped into n groups in such way that each group shares the same current state. The dynamic programming algorithm is then applied separately for each of the groups. This effectively leads to n dynamic programming states when moving from one stage to the next.

In one embodiment, the previous state, the current state, and the next state define a curvature. In this case the distance is distance between successive curvatures.

Preferably, the states belong to segments arranged along a margin line between a foreground object and a background in an image frame.

In one embodiment, the successive curvatures are curvatures determined for successive segments along the line or curvatures determined for one segment for successive image frames. In the former case it is assumed that the curvature of a segment will generally not vary very much along the margin line from one segment to the next segment. In the latter case it is assumed that the curvature of a segment will generally not vary very much from one frame to the next frame.

Similarly, the curvature of a segment in a previous frame is preferably determined during the processing of the previous frame and is assumed fixed for the processing of a current frame.

In one embodiment, the states of the system are alpha-matting profiles. Preferably, an alpha-matting profile is a soft step profile of a parameter alpha being indicative of a transparency. The state of the alpha-matting profile is defined by a center point of the soft step profile, which locates the point within the transition interval where alpha becomes 0.5, and the width (and in turn the slope) of the transition. Since the cost, which is the curvature cost, only depends on the location of the center point, a two dimensional distance transformation can advantageously be restricted to a one dimensional problem.

The alpha-matting profiles form a varying system of n states in that the alpha matting profiles of a previous segment correspond to n previous states, the alpha matting profiles of a current segment correspond to n current states and the alpha matting profiles of a next segment correspond to n next states. In this embodiment a sequence of transitions between alpha-matting profiles is determined. After a final iteration, the super state with the minimum accumulated cost is determined and the sequence of the preceding super states leading to the final super state with the minimum accumulated cost is retrieved. In other words, alpha matting-profiles with minimum deviations, being in particular expressed as curvature costs, are determined. This results in a smooth cutout of a foreground object from the background. Advantageously, the method does not only provide visually appealing results but also low computational effort. This renders the method particularly suitable for alpha-matting applications when high resolution image data should be processed.

Further characteristics of the invention will become apparent from the description of the embodiments according to the invention together with the claims and the included drawings. Embodiments according to the invention can fulfill individual characteristics or a combination of several characteristics.

For a better understanding the invention shall now be explained in more detail in the following description with reference to the figures. It is understood that the invention is not limited to this exemplary embodiment and that specified features can also expediently be combined and/or modified without departing from the scope of the present invention as defined in the appended claims.

**BRIEF DESCRIPTION OF THE DRAWINGS**

Fig. 1 shows a simplified drawing of consecutive segments of a margin line separating a foreground object and a background in an image;

Fig. 2 depicts a simplified alpha-matting profile;

Fig. 3 shows the computation of a common lower envelope for the basic 1D distance transform;

Fig. 4 shows a 1D distance transform of n possible states;

Fig. 5 shows n distance transforms of $n^2$ possible super states;

Fig. 6 illustrates a state relabeling after a transition from one distance transform stage to the next;

Fig. 7 shows the geometry of the vectors helpful for understanding the curvature cost optimization;

Fig. 8 depicts shifted parabolas with additional minimum curvature costs for generalized lower envelope computation;

Fig. 9 illustrates a method according to the invention for determining a sequence of transitions for a varying state of a system; and

Fig. 10 shows a simplified block diagram of an apparatus for determining a sequence of transitions for a varying state of a system.

**DETAILED DESCRIPTION OF PREFERED EMBODIMENTS**

In the following the invention shall be explained with reference to its application to alpha matting. However, the invention is likewise useful for a range of other applications, e.g. binary segmentation, or even driver assistance systems, such as tracking of a vehicle moving ahead. In the latter example a constant steering angle leads to a constant curvature of the movement trajectory.

For a better understanding of the invention, some helpful background shall be given first.

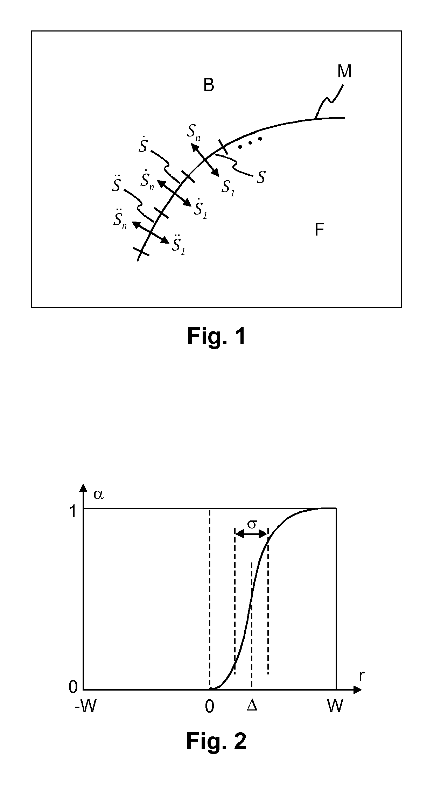

In the simplified drawing of Fig. 1, there is an image frame at an arbitrary point in time. The image frame is, for example, taken from a stream of image data, for example from high resolution video data. In the frame there is a margin line M between a foreground object F and a background B. The margin line M is divided into a plurality of segments $S$, $\dot{S}$, $\ddot{S}$.

In the following, $S$ denotes a segment and $S_i$ its associated states, with $i \in \{1,...,n\}$. $\dot{S}$ denotes the segment preceding $S$, and $\dot{S}_i$ its associated states. $\ddot{S}$ denotes the segment preceding $\dot{S}$, and $\ddot{S}_i$ its associated states.

The foreground object F is softly extracted from the background B using alpha matting. It is, therefore, desirable to determine alpha matting profiles in the segments. These alpha matting profiles are defined by the states $S_i$. The n profiles of a segment, by way of an example only, represent the states of a varying system.

In segment $\ddot{S}$ there are states $\ddot{S}_1..\ddot{S}_n$, i.e. n potential alpha matting profiles across the margin line M, according to the embodiment of the invention. Similarly, in segment $\dot{S}$ there are the states $\dot{S}_1.. \dot{S}_n$. In segment $S$ there are the

states $S_1..S_n$, and so on. The alpha matting profiles of each segment S, $\dot{S}$, $\ddot{S}$ form a totality having a finite number of states.

In C. Rother et al.: "GrabCut: interactive foreground extraction using iterated graph cuts", ACM Transactions on Graphics Vol. 23 (2004), pp. 309-314, a dynamic programming algorithm is applied to find the "optimal" (referring to some global minimum cost) set of alpha profiles for all segments. Each alpha profile is defined by a "soft-step" function as illustrated in Fig. 1. The value of alpha is defined between 0 and 1. The alpha-matting profile is a soft step function defined by two parameters $\Delta$ and $\sigma$. The center point $\Delta$ locates the point within the transition interval where alpha becomes 0.5, and $\sigma$ is a measure of the width (and in turn the slope) of the transition. Both parameters are discretized, leading to a set of profile functions, out of which one is chosen for each segment by the optimization. The value of alpha represents the transparency of the pixels across the margin line M.

Each alpha profile results in some data cost for the segment, depending on how well the profile fits the set of pixels in the segment. In addition, a difference between the alpha profiles of neighboring segments produces some smoothness costs:

$$\tilde{V} = \lambda_1\big(\Delta - \dot{\Delta}\big) + \lambda_2(\sigma - \dot{\sigma}).$$

In the equation, $\Delta$ and $\sigma$ denote the profile parameters of the current segment, and $\dot{\Delta}$ and $\dot{\sigma}$ denote the profile parameters of the preceding segment. $\lambda_1$ and $\lambda_2$ are some weight factors for balancing the smoothness costs with the data costs. The smaller the difference between the two neighboring profiles, the smaller the smoothness cost.

The task of the dynamic programming algorithm is to find the set of profiles that causes the minimum overall costs. As such, it determines the global optimum in a computationally more efficient way compared to a brute-force approach.

Although dynamic programming already dramatically reduces the computational cost of finding the globally optimal set of profiles, its complexity is still $O(n^2)$, where $n$ denotes the possible number of profiles for a segment. This is because for all possible current states (n profiles) in the current segment the algorithm analyzes the transition costs from all possible states (n profiles) of the preceding segment.

The article P. F. Felzenszwalb et al.: "Distance Transforms of Sampled Functions", Theory of Computing Vol. 8 (2012), pp. 415-428, describes a method to reduce this complexity to $O(n)$. It describes a 1D distance transform for cost functions that have one parameter. It also describes how a set of such 1D distance transforms can be combined to handle cost functions defined by more than one parameter.

Thus a 1D distance transform serves as the basic building block for handling cost functions defined by an arbitrary number of parameters. It should be noted that the cost function in the article by C. Rother et al. depends on the two parameters $\Delta$ and $\sigma$, so 2D distance transforms have to be used.

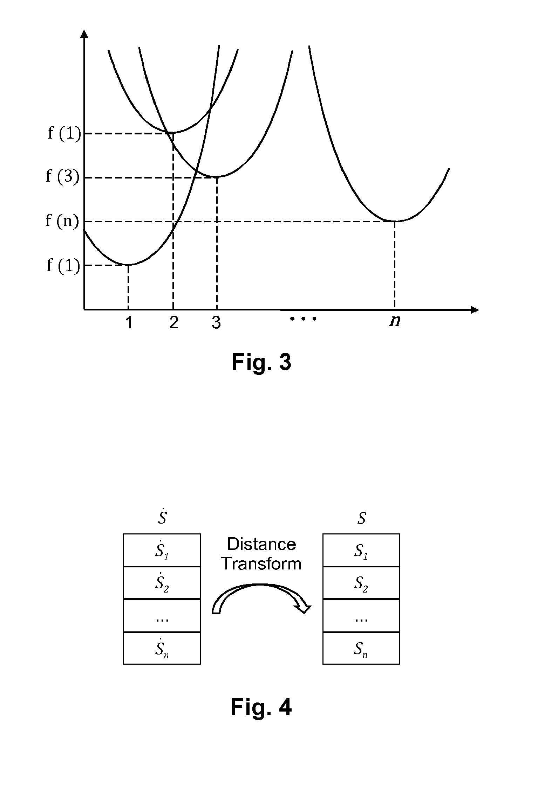

For the basic 1D distance transform a common "lower envelope" is computed for a set of mathematical functions. If the squared Euclidean distance is used as a metric, as is the case in the article by C. Rother et al., these functions are a set of parabolas. This is shown in Fig. 3.

The lower envelope is constructed in a "forward manner" as follows. The horizontal axis corresponds to the state axis. It is treated as continuous in this stage, although the optimization variable is discretized into a finite set of possible (usually equally-spaced) values, corresponding to the different states. The vertical axis corresponds to state transition costs. For each state, a parabola is constructed, where the vertical coordinate of the parabola's minimum indicates the costs accumulated so far for this state. The horizontal coordinate of the parabola's minimum coincides with its root state. The parabola rises from thereon with increasing distance to its root state. The lower envelope can be computed efficiently as described in detail in the article by P. F. Felzenszwalb et al. A mapping is maintained between intervals on the horizontal axis and the associated parabola (and in turn the previous state) which contributed the lower envelope in the interval.

After its construction, an implicit transition to the next dynamic programing/distance transform stage is made before the lower envelope is used in a "backward" manner. For each current state, i.e. position on the state axis, the lower envelope's value at that position indicates the new accumulated costs. The corresponding envelope interval is determined, which in turn maps to the optimal previous state by help of the parabola mapping. The latter yields the state's best predecessor. Memorizing the predecessors and repeating the procedure for all stages of the problem space allows to trace back the optimal path, i.e. the best set of profiles, afterwards.

Finally, it should be noted that the smoothness cost used by C. Rother et al. is computed from the profiles of two neighboring segments only. This allows a direct conceptual mapping of a border matting segment to a dynamic programming stage. A single profile translates into a dynamic programming state.

A new curvature cost is introduced in Wang et al.: "Interactive Video Cutout", ACM Transactions on Graphics Vol. 24 (2005), pp. 585-594. The curvature of a contour is defined as:

$$\vec{\kappa} = \tilde{c}^{i-1} - 2\tilde{c}^i + \tilde{c}^{i+1},$$

where $\tilde{c}^i$ denotes the point for segment $i$ where the final computed alpha equals 0.5.

The curvature cost is defined as:

$$w = \lambda \cdot \left\| \overrightarrow{\Delta \kappa} \right\|^2$$

with

$$\overrightarrow{\Delta \kappa} = \vec{\kappa} - \vec{\kappa}_{\text{prev}}$$

$\vec{\kappa}$ denotes the curvature of the final alpha contour. $\vec{\kappa}_{\text{prev}}$ denotes the corresponding curvature in the temporally preceding frame in the video sequence. $\lambda$ is some weight factor for balancing the curvature costs with the other costs. The curvature cost is thus the weighted square of the length of the difference between the current curvature vector and its temporal predecessor.

It is important to note that the curvature cost is defined over three consecutive segments. This precludes the direct conceptual mapping of a border matting segment to a dynamic programming stage.

Since the curvature cost depends on parameter $\Delta$ only (the three values $\tilde{c}^i$ defining the curvature depend on three values $\Delta$, but are independent from $\sigma$), the following description is limited to the necessary enhancements to a 1D distance transform for simplicity. Including $\sigma$ in the computation leads to an enhanced 2D distance transform, which can be achieved through a combination of a set of enhanced 1D distance transforms similar to the description given by P. F. Felzenszwalb et al.

A first enhancement consists in the combination of two consecutive segment states into one distance transform state.

The main difficulty of the curvature cost in the context of optimization is that states of three consecutive segments must be incorporated in the optimization, as the curvature $\vec{\kappa}$ is defined by the parameters of three segments, whereas dynamic programming and thus distance transform compute the optimum transitions only from one stage to the next. In the article by C. Rother et al. a segment can conceptually be directly mapped to a dynamic programing/distance transform stage, i.e. n possible alpha profiles result in n possible dynamic programing/distance transform states, as illustrated in Fig. 4.

This is no longer possible when including the curvature cost in the optimization, so a different approach is required. The proposed method combines two states of consecutive segments into one dynamic programing/distance transform state, leading to $n^2$ possible dynamic programing/distance transform states.

In the following, a distinction is made between a segment state, which corresponds to a profile, and a dynamic programing/distance transform state, which is a combination of two segment states of two consecutive segments, i.e. a previous segment and a current segment.

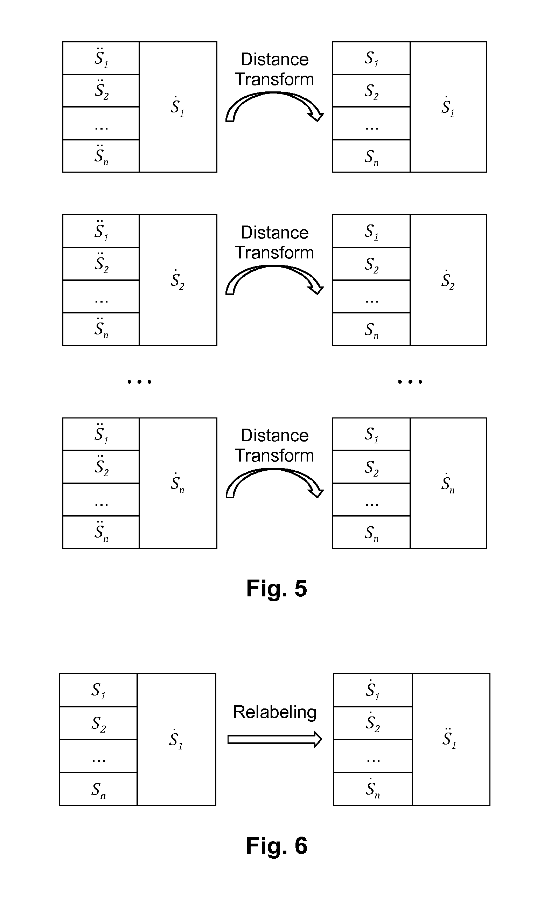

One aspect of the proposed method is to group these dynamic programing/distance transform states into n groups in a way that each group shares the same segment state of the current segment. The distance transform is then applied separately for each of the groups, leading to $n$ distance transforms when moving from one stage to the next. This is illustrated in Fig. 5. Each distance transform moves from segment $k - 2$ to segment $k$, under the condition of a certain state of segment $k - 1$. This is fundamentally different from the approach by C. Rother et al., where each distance transform moves from segment $k - 1$ to segment $k$.

According to the definitions of $S$, $\dot{S}$ and $\ddot{S}$, a transition from one distance transform stage to the next implicitly causes a state relabeling: $\dot{S}_i$ becomes $\ddot{S}_i$ and $S_i$ becomes $\dot{S}_i$, as shown in Fig. 6.

Before applying the next set of distance transforms, regrouping is required, since immediately after the distance transform (with implicit state relabeling), the states are grouped so that each group shares the same segment state $\ddot{S}$ out of the previous segment. However, for the following distance transform they need again be grouped in a way that a group shares the same segment state $\dot{S}$ out of the newer segment. This regrouping favorably not only maintains the accumulated costs, but also the best predecessors.

A second enhancement consists in a generalized distance transform for curvature cost optimization. As already described above, but using a slightly different notation, the curvature is defined by Wang et al. as

$$\vec{\kappa} = \tilde{\tilde{c}} - 2\tilde{c} + \tilde{c}.$$

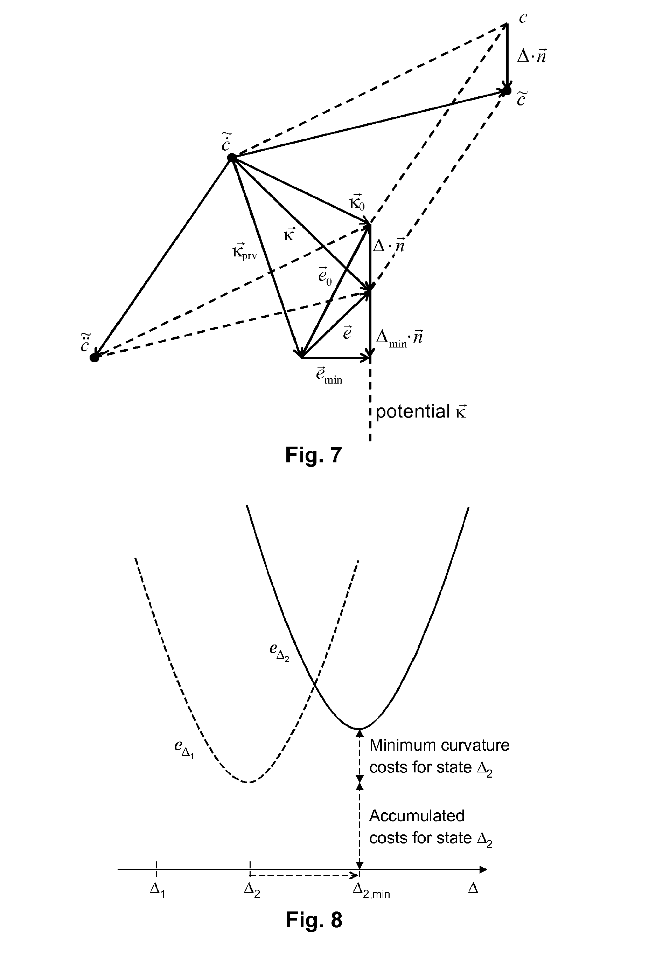

Fig. 7 illustrates the geometry of the involved vectors. In this figure the following definitions are used:

$\vec{n}$: segment norm vector

$\tilde{\tilde{c}}$ point where $\alpha = 0.5$ for segment $k$ - 2

$\tilde{c}$ : point where $\alpha = 0.5$ for segment $k$ - 1

c: center point for segment $k$

$\tilde{\tilde{\Delta}}$ : $\Delta$ defining $\tilde{\tilde{c}}$

$\tilde{\Delta}$ : $\Delta$ defining c

$\Delta$: current $\Delta$

$\Delta_{\min}$ : $\Delta$ that minimizes $\|\vec{e}\|^2$

$\vec{\kappa}$: curvature vector for current $\Delta$

$\vec{\kappa_0}$ : curvature vector for $\Delta = 0$

$\vec{\kappa}_{\mathrm{prv}}$: temporally preceding curvature

$\vec{e}$: curvature error vector

$\vec{e_0}$: curvature error vector for $\Delta = 0$

$\vec{e}_{\min}$: smallest possible curvature error vector

$\vec{\kappa_0}$ is the curvature vector if $\Delta = 0$ was chosen for the current segment. $\overline{\kappa}$ is the curvature vector for some arbitrary $\Delta$. It can be seen that whichever $\Delta$ is chosen, the resulting curvature vector $\overline{\kappa}$ will end on the line $\vec{\kappa_0} + \lambda \vec{n}$ (line of potential $\overline{\kappa}$ in Fig. 7). This means that the problem of minimizing the curvature cost, which seems to be a 2D problem at first glance as the vectors are defined in 2D space, can be reduced to a 1D problem by fixing the parameter $\tilde{\tilde{\Delta}}$ (and thus $\tilde{c}$ ) in the middle segment. The task for an individual state is to find a $\Delta = \Delta_{\min}$ so that the curvature error vector e is minimal. This is the case when $\vec{e}$ is perpendicular to $\vec{n}$, which leads to:

$$\|\vec{e}\|^2 = \|\vec{e}_0 + \Delta \cdot \vec{n}\|^2 + (\Delta - \Delta_{\min})^2$$

with

$$\Delta_{\min} = -\vec{e}_0 \cdot \vec{n} = \left(\vec{\kappa}_{\mathrm{prv}} - \vec{\kappa}_0\right) \cdot \vec{n}.$$

It should be noted that since $\vec{\kappa_0}$ depends on c and $\tilde{\tilde{c}}$, $\Delta_{\min}$ is different for each dynamic programing/distance transform state.

The curvature cost is defined as the $\lambda$-weighted square of the length of the curvature error vector e:

$$\tilde{w} = \lambda \cdot \|\vec{e}\|^2 = \lambda \cdot \|\vec{e}_0 + \Delta \cdot \vec{n}\|^2 + \lambda \cdot (\Delta - \Delta_{\min})^2.$$

For the construction of the lower envelope of the state parabolas on the $\Delta$-axis this means that a given state $\Delta_i$ creates a parabola for the curvature cost which has its minimum shifted on the $\Delta$-axis to $\Delta = \Delta_{i,\min}$. The corresponding minimum curvature cost is $\tilde{w}_{i,\min} = \lambda \cdot ||\vec{e}_{i,0} + \Delta_{i,\min} \cdot \vec{n}||^2$. The parabola rises from its minimum, which equals the sum of the cost accumulated so far for the state and its minimum curvature cost, with increasing distance to $\Delta_{i,\min}$. This is shown in Fig. 8.

This result is an extension of the approach by P. F. Felzenszwalb et al., where the parabolas always have their minimum at the state's position on the state axis. Without any state transition, no extra costs are generated. In the proposed extended distance transform, this minimum is in general horizontally shifted. In addition, some extra minimum (curvature) costs are added to the costs accumulated so far for each state.

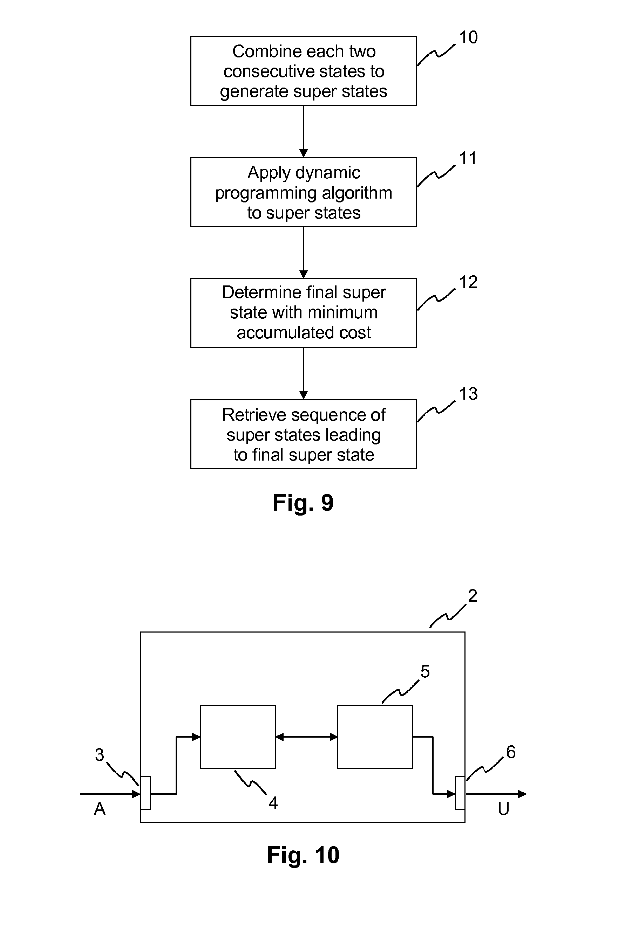

Fig. 9 schematically illustrates a method according to the invention for determining a sequence of transitions for a varying state of a system, which is described by a finite number of states $S_i$, $\dot{S}_i$, $\ddot{S}_i$, wherein a transition from a current state $\dot{S}_i$ to a next state $S_i$ causes a cost in dependence of a distance that is dependent on a previous state $\ddot{S}_i$, the current state $\dot{S}_i$, and the next state $S_i$. In a first step each two consecutive states are combined 10 to generate super states, wherein the cost for a transition from a current super state to a next super state only depends on the current super state and the next super state. In an iterative process a dynamic programming algorithm is then applied 11 to the super states in order to determine a minimum accumulated cost for each varying super state and to determine a preceding super state that led to the minimum accumulated cost. After a final iteration, a final super state with the minimum accumulated cost is determined 12 and the sequence of the preceding super states leading to the final super state with the minimum accumulated cost is retrieved 13.

Fig. 10 depicts an apparatus 2 for determining a sequence of transitions for a varying state of a system, which is described by a finite number of states $S_i$, $\dot{S}_i$, $\ddot{S}_i$, wherein a transition from a current state $\dot{S}_i$ to a next state $S_i$ causes a cost in dependence of a distance that is dependent on a previous state $\ddot{S}_i$, the current state $\dot{S}_i$, and the next state $S_i$. The apparatus 2 is particularly suitable for determining alpha-matting profiles. It comprises an input 3 for receiving an image frame A or a stream of image frames. A combining unit 4 combines 10 each two consecutive states to generate super states, wherein the cost for a transition from a current super state to a next super state only depends on the current super state and the next super state. A processing unit 5 applies 11 a dynamic programming algorithm to the super states in an iterative process in order to determine a minimum accumulated cost for each varying super state and to determine a preceding super state that led to the minimum accumulated cost. After a final iteration, the processing unit 5 determines 12 a final super state with the minimum accumulated cost and retrieves 13 the sequence of the preceding super states leading to the final super state with the minimum accumulated cost. Via an output 6 the apparatus 2 provides processed image data U, for example a softly cut out foreground object F or a plurality of alpha-matting profiles for further processing of the image data, for example for soft cut out. The combining unit 4 and the processing unit 5 are implemented as dedicated hardware or as software running on a processor. Of course, they may likewise be combined into a single unit. Also, the input 3 and the output 6 can likewise form a single bi-directional interface.

The apparatus 2 is particularly suitable for carrying out the method according to aspects of the invention. Since the computational effort for application of this method is significantly low, the apparatus 2 is particularly suitable for processing high resolution image data.

**Claims**

1. A method of determining a sequence of transitions for a varying state of a system, wherein the system is described by a finite number $n$ of states ($S_i$), and wherein a transition from a current state ($\dot{S}_i$) to a next state ($S_i$) causes a cost in dependence of a distance that is dependent on a previous state ($\ddot{S}_i$), the current state ($\dot{S}_i$), and the next state ($S_i$), the method **comprising:**

   - combining (10) each two consecutive states to generate super states, wherein the cost for a transition from a current super state to a next super state only depends on the current super state and the next super state;
   - in an iterative process, applying (11) a dynamic programming algorithm to the super states in order to determine a minimum accumulated cost for each varying super state and to determine a preceding super state that led to the minimum accumulated cost; and
   - after a final iteration, determining (12) a final super state with the minimum accumulated cost and retrieving (13) the sequence of the preceding super states leading to the final super state with the minimum accumulated cost.

2. The method according to claim 1, **wherein** the super states are grouped into $n$ groups in such way that each group shares the same current state ($\dot{S}_i$), and wherein the dynamic programming algorithm is applied (11) separately for each of the groups.

3. The method according to claim 1 or 2, **wherein** the dynamic programming algorithm is implemented as a distance transform.

4. The method according to one of the preceding claims, **wherein** the cost (V) depends on the squared distance or the absolute distance.

5. The method according to one of the preceding claims, **wherein** the previous state ($\ddot{S}_i$), the current state ($\dot{S}_i$), and the next state ($S_i$) define a curvature, and wherein the distance is distance between successive curvatures.

6. The method according to claim 5, **wherein** the states ($S_i$, $\dot{S}_i$, $\ddot{S}_i$) belong to segments (S, $\dot{S}$, $\ddot{S}$) arranged along a margin line (M) between a foreground object (F) and a background (B) in an image frame (A).

7. The method according to claim 6, **wherein** the successive curvatures are curvatures determined for successive segments along the line (M) or curvatures determined for one segment for successive image frames (A).

8. The method according to claim 7, **wherein** the curvature of a segment ($\dot{S}$) in a previous frame is determined during the processing of the previous frame and is assumed fixed for the processing of a current frame.

9. The method according to one of the preceding claims, **wherein** the states ($S_i$, $\dot{S}_i$, $\ddot{S}_i$) of the system are alpha-matting profiles.

10. The method according to claim 9, **wherein** an alpha-matting profile is a soft step profile of a parameter alpha being indicative of a transparency and the state of the alpha-matting profile is defined by a center point ($\Delta$) of the soft step profile.

11. An apparatus (2) for determining a sequence of transitions for a varying state of a system, wherein the system is described by a finite number n of states ($S_i$), and wherein a transition from a current state ($\dot{S}_i$) to a next state ($S_i$) causes a cost in dependence of a distance that is dependent on a previous state ($\ddot{S}_i$), the current state ($\dot{S}_i$), and the next state ($S_i$), the apparatus (2) **comprising:**

   - a combining unit (4) configured to combine (10) each two consecutive states to generate super states, wherein the cost (V) for a transition from a current super state to a next super state only depends on the current super state and the next super state;
   - a processing unit (5), which is configured, in an iterative process, to apply (11) a dynamic programming algorithm to the super states in order to determine a minimum accumulated cost for each varying super state and to determine a preceding super state that led to the minimum accumulated cost; and
   - wherein the processing unit (5) is further configured, after a final iteration, to determine (12) a final super state with the minimum accumulated cost and to retrieve (13) the sequence of the preceding super states leading to the final super state with the minimum accumulated cost.

12. A computer readable storage medium having stored therein instructions enabling determining a sequence of transitions for a varying state of a system, wherein the system is described by a finite number n of states ($S_i$), and wherein a transition from a current state ($\dot{S}_i$) to a next state ($S_i$) causes a cost in dependence of a distance that is dependent on a previous state ($\ddot{S}_i$), the current state ($\dot{S}_i$), and the next state ($S_i$), wherein the instructions, when executed by a computer, cause the computer to:

   - combine (10) each two consecutive states to generate super states, wherein the cost (V) for a transition from a current super state to a next super state only depends on the current super state and the next super state;
   - in an iterative process, apply (11) a dynamic programming algorithm to the super states in order to determine a minimum accumulated cost for each varying super state and to determine a preceding super state that led to the minimum accumulated cost; and
   - after a final iteration, determine (12) a final super state with the minimum accumulated cost and retrieve (13) the sequence of the preceding super states leading to the final super state with the minimum accumulated cost.

**Fig. 1**

**Fig. 2**

**Fig. 3**

**Fig. 4**

**Fig. 5**

**Fig. 6**

$$c$$
$$\Delta \cdot \vec{n}$$
$$\tilde{c}$$
$$\tilde{c}$$
$$\vec{\kappa}_0$$
$$\vec{\kappa}$$
$$\vec{\kappa}_{prv}$$
$$\Delta \cdot \vec{n}$$
$$\vec{e}_0$$
$$\tilde{c}$$
$$\vec{e}$$
$$\Delta_{min} \cdot \vec{n}$$
$$\vec{e}_{min}$$
potential $\vec{\kappa}$

**Fig. 7**

$$e_{\Delta_2}$$
$$e_{\Delta_1}$$
Minimum curvature costs for state $\Delta_2$

Accumulated costs for state $\Delta_2$

$$\Delta_1 \qquad \Delta_2 \qquad \Delta_{2,min} \qquad \Delta$$

**Fig. 8**

Combine each two
consecutive states to
generate super states
10

Apply dynamic
programming algorithm
to super states
11

Determine final super
state with minimum
accumulated cost
12

Retrieve sequence of
super states leading
to final super state
13

**Fig. 9**

**Fig. 10**

Europäisches
Patentamt

European
Patent Office

Office européen
des brevets

## EUROPEAN SEARCH REPORT

Application Number

EP 14 30 6258

### DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| Y | ROTHER C ET AL: "GrabCut - interactive foreground extraction using iterated graph cuts", ACM TRANSACTIONS ON GRAPHICS (TOG), ACM, US, vol. 23, no. 3, 1 August 2004 (2004-08-01), pages 309-314, XP002340109, ISSN: 0730-0301, DOI: 10.1145/1015706.1015720 * abstract, sections 1-5, Figs. 1-8 * | 1-12 | INV. G06T7/00 H04N5/272 |
| A | PEDRO F. FELZENSZWALB ET AL: "Distance Transforms of Sample Functions", THEORY OF COMPUTING, vol. 8, no. 1, 1 January 2012 (2012-01-01), pages 415-428, XP055169285, DOI: 10.4086/toc.2012.v008a019 * the whole document * | 1-12 | |
| Y | JUE WANG ET AL: "Interactive video cutout", ACM TRANSACTIONS ON GRAPHICS, vol. 24, no. 3, 1 July 2005 (2005-07-01), page 585, XP055012236, ISSN: 0730-0301, DOI: 10.1145/1073204.1073233 * abstract,sections 1-8, Figs. 1-11 * | 1-12 | TECHNICAL FIELDS SEARCHED (IPC) G06T G06K H04N |
| Y | MARTEAU P F ET AL: "Speeding up simplification of polygonal curves using nested approximations", PATTERN ANALYSIS AND APPLICATIONS, SPRINGER-VERLAG, LO, vol. 12, no. 4, 7 August 2008 (2008-08-07), pages 367-375, XP019742962, ISSN: 1433-755X * abstract, sections 1-3, Table 1 * | 1-12 | |

The present search report has been drawn up for all claims

| Place of search | Date of completion of the search | Examiner |
|---|---|---|
| Munich | 16 February 2015 | Borotschnig, Hermann |

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Non-patent literature cited in the description**

- **C. ROTHER et al.** GrabCut: interactive foreground extraction using iterated graph cuts. *ACM Transactions on Graphics,* 2004, vol. 23, 309-314

- **P. F. FELZENSZWALB et al.** Distance Transforms of Sampled Functions. *Theory of Computing,* 2012, vol. 8, 415-428
- **WANG et al.** Interactive Video Cutout. *ACM Transactions on Graphics,* 2005, vol. 24, 585-594